# EUROPÄISCHE PATENTSCHRIFT

(11) **EP 0 738 685 B1**
(45) Veröffentlichungstag und Bekanntmachung des Hinweises auf die Patenterteilung: **11.08.1999**
(21) Anmeldenummer: 96105403.8
(22) Anmeldetag: 04.04.1996
(51) Int. Cl.: C01G 1/06

(54) **Metallchloridgenerator**
Metal chloride generator
Générateur de chlorures métalliques

(30) Priorität: 20.04.1995 DE 19514663
(43) Veröffentlichungstag der Anmeldung: 23.10.1996
(73) Patentinhaber: KRONOS TITAN-GmbH, D-51373 Leverkusen (DE)
(72) Erfinder: Hartmann, Achim, Dipl.-Ing., 50259 Pulheim (DE); Trüb, Hermann, Dr., 51381 Leverkusen (DE)

(56) Entgegenhaltungen:
- EP-A- 0 427 878
- DE-A- 2 032 545
- GB-A- 1 211 912
- DATABASE WPI Week 7610 Derwent Publications Ltd., London, GB; AN 76-17790x XP002011632 & JP-A-51 008 192 (NIPPON MINING KK) , 22.Januar 1976

## Beschreibung

Die Erfindung richtet sich auf ein Verfahren zur Bildung von Metallchloriden aus Chlor und wenigstens einem in einem Gasstrom feinverteilten Metall in einem Generator und deren Einmischung in einen Titantetrachloridstrom sowie auf eine Vorrichtung zur Erzeugung eines Metallchlorids oder eines Metallchloridgemisches, bestehend aus einem zylinderähnlichen, mit feuerfesten Steinen ausgekleideten Reaktionsraum, wenigstens je einer zentral angeordneten Einlaßdüse für ein in einem Gasstrom fein verteiltes Metall oder Metallgemisch und für Chlor im oberen Bereich und einem Gasaustritt im unteren Bereich des Reaktionsraumes.

Wasserfreie Metallchloride, insbesondere Aluminiumtrichlorid, werden beispielsweise bei der Herstellung von Titandioxid als die Pigmentqualität beeinflussende Zusätze benötigt. Sie werden unmittelbar vor ihrer Einspeisung in einen Titantetrachloridstrom aus Chlor und feinteiligem Metall in einer exothermen Reaktion in einem Reaktor, der gewöhnlich als Aluminiumchloridgenerator bezeichnet wird, gebildet.

Ein Verfahren zur Herstellung eines Metallchlorids oder eines Metallchloridgemisches ist aus der DE 2 032 545 bekannt. Dort ist auch angegeben, daß ein Generator zur Erzeugung solcher Metallchloride mit keramischem Material ausgekleidet ist, um das metallische Gehäuse des Generators besser vor Korrosion zu schützen. In der DE 2 032 545 ist auch beschrieben, welche Verfahrensbedingungen einzuhalten sind, wenn ein Gemisch verschiedener Metallchloride erzeugt werden soll. Ebenso ist dort erwähnt, daß die bei der Bildung von Metallchloriden auftretende Wärme zur weiteren Erhitzung von Titantetrachlorid benutzt werden kann. Dabei wird ein Teil des Titantetrachloriddampfes in den Reaktionsraum eingeleitet und zusammen mit dem metallchloridhaltigen Gasgemisch abgeführt.

Bei der Bildung der Metallchloride treten Temperaturen von über 2000 °C auf. Wegen der sehr hohen thermischen Belastung ist die Lebensdauer der Auskleidung eines Metallchloridgenerators mit feuerfesten Steinen begrenzt. Als ein Nachteil des bekannten Generators ist auch anzusehen, daß wie in der DE 2 032 545 beschrieben, der Generator vor Beginn der Umsetzung vorgeheizt werden muß, was durch eine Hilfsflamme erfolgt, die mit einem gesondert in der Kammer eingebrachten Brenner erzeugt werden muß.

Aus der EP 0 427 878 A1 ist eine Vorrichtung zur weiteren Vorerhitzung von Sauerstoff, der für die Umsetzung von Titantetrachlorid zu Titandioxid benötigt wird, bekannt. Dabei wird ein Schutzfilm aus dem 850 bis 1000 °C heißen Sauerstoff entlang der Innenwände der Reaktionskammer, insbesondere in der Vorheizzone, erzeugt. Der Eintritt des Sauerstoffes in die Vorheizzone ist als radialer Gaseinlaß ausgebildet.

Der Erfindung liegt das Problem zugrunde, die Lebensdauer und Zuverlässigkeit einer Vorrichtung zur Erzeugung von Metallchloriden zu erhöhen und die Wirtschaftlichkeit insgesamt bei der Herstellung von Titandioxid nach dem Chloridverfahren durch Optimierung des Energieeinsatzes noch zu verbessern.

Das Problem wird verfahrensmäßig dadurch gelöst, daß die heißen Metallchloride vom direkten Wandkontakt im zylinderähnlichen Generator dadurch abgehalten werden, daß die Wandflächen des Generators innen in der gleichen Richtung wie die heißen Metallchloride von einem Titantetrachloridstrom filmartig überstrichen werden.

Vorrichtungsmäßig wird das Problem dadurch gelöst, daß im oberen Bereich des Reaktionsraumes ein axialer Gaseinlaß um die zentral angeordneten Einlaßdüsen vorhanden ist, der so ausgebildet ist, daß ein darüber in den Reaktionsraum eintretendes Gas die Auskleidung der Wandflächen des Generators filmartig bestreicht.

Weitere vorteilhafte Ausgestaltungen der Erfindung sind in den Unteransprüchen beschrieben.

Als besonderer Vorteil der Erfindung ist anzusehen, daß die Umgestaltung eines an sich bekannten Apparates zu einer spürbaren Erhöhung der Zuverlässigkeit führt und die damit mögliche Verfahrensänderung zu einer unproblematischen deutlichen Erhöhung der Temperatur des Titantetrachlorids und damit zu einer Energieeinsparung beim Gesamtverfahren führt.

Die Erfindung ist in der Zeichnung dargestellt und weiter beispielhaft beschrieben. Es zeigen:
- Figur 1:: Längsschnitt durch einen Aluminiumchloridgenerator,
- Figur 2:: Querschnitt durch einen Aluminiumchloridgenerator.

Der Metallchloridgenerator hat eine im wesentlichen zylindrische Gestalt; er wird üblicherweise in vertikaler Position betrieben, wobei die Zufuhr der Reaktanten (feinteiliges Metall und Chlor) im oberen Bereich und der Austritt der heißen Metallchloridgase durch eine zentrale Öffnung im unteren Bereich erfolgt.

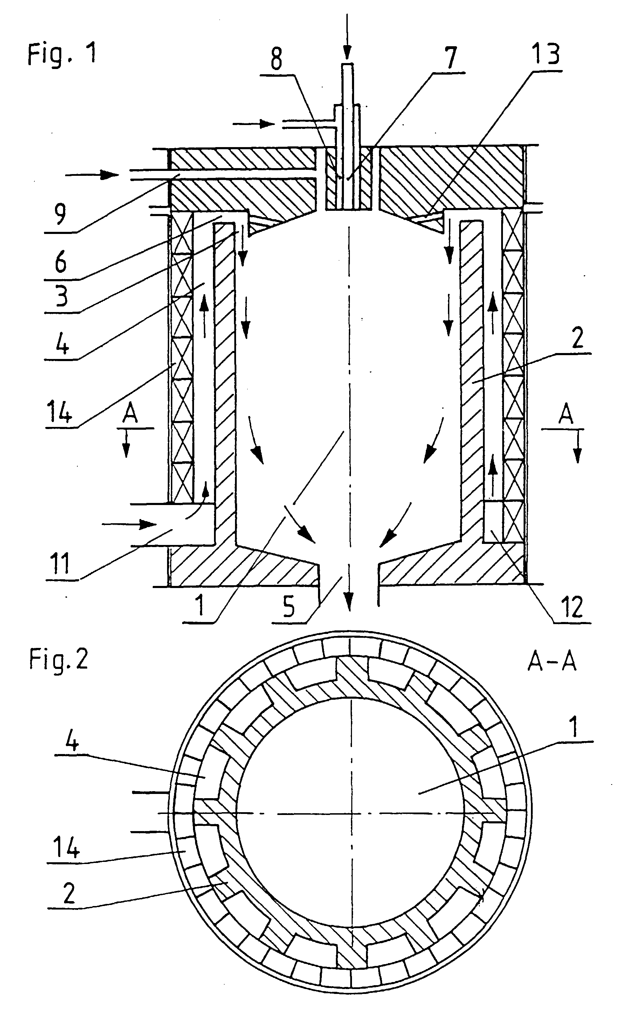

In der speziellen Ausführungsform gemäß Figur 1 und 2 ist der zylinderähnliche Reaktionsraum 1 oben deckelartig abgeschlossen. Der Wandbereich weist eine feuerfeste Ausmauerung 2 auf. Sie wird erfindungsgemäß einmal von dem aus einem Ringspalt 3 austretenden, durch Pfeile gekennzeichnetem Gasstrom, dessen Temperatur höchsten 800 °C beträgt, an der Innenseite filmartig überstrichen, sowie zusätzlich durch das Medium in den erfindungsgemäßen Kanälen 4 innerhalb der Ausmauerung 2 gekühlt. Durch eine zentrale Austrittsöffnung 5 können die gebildeten Metallchloride vermischt mit dem "Kühlgas" den Reaktionsraum 1 verlassen.

Die Kanäle 4 münden in einem Verteilerring 6, der eine gleichmäßige Gaszufuhr in den Ringspalt 3 sicherstellt. Es wird ein laminarer Kühlstrom über die Ausmauerung 2 angestrebt, was dadurch erreicht werden kann, daß eine einer Reynolds Zahl zwischen 500 und 1500 entsprechende Gasgeschwindigkeit im Ringspalt 3 eingestellt wird. Ein solcher kühlender Gasfilm vermischt sich erst relativ spät mit dem heißen Metallchloriddampf. Die Metallpartikel (meist Aluminium, häufig auch mit Zirkonium und/oder Zink und/oder Zinn gemischt) werden, meist in Stickstoff suspendiert, über eine zentrale Düse 7 in den Reaktionsraum 1 eingetragen. Das Chlorgas wird über die Einläße 8 und 9 eingespeist.

Der in der Zeichnung dargestellter Generator ist besonders geeignet zur Erzeugung der von Titandioxidpigmenten nach dem Chloridverfahren benötigten Zusätze. Bei dieser Verwendung bietet sich als Kühlgas besonders Titantetrachlorid an, das in einem seitlichen Stutzen 11 in Verbindung mit einem unteren Ringkanal 12 mit einer Temperatur zwischen 200 °C und 800 °C, bevorzugt 350 °C, eintritt. Der Generator hat einen Innendurchmesser von ca. 800 mm und ist etwa 2400 mm hoch. Er ist an die Leistung einer Produktionsstraße angepaßt, die auf einen stündlichen Verbrauch von 16 t Titantetrachlorid ausgelegt ist.

In diesem Beispiel wird der Kühlgasstrom im Wandbereich auf 12 Kanäle 4 aufgeteilt. Über die Düse 7 werden ca. 50 kg Aluminium pro Stunde, suspendiert in 30 m³/h Stickstoff eingetragen, über die Leitungen 8 und 9 werden pro Stunde jeweils 65 Normalkubikmeter Chlor eingespeist. Gegenüber den eingegebenen Metallen ist die Chlormenge überstöchiometrisch.

Eine vorteilhafte Weiterbildung des Generators ist in Figur 1 durch 3 Kanäle 13 angedeutet. Über diese Kanäle gelangt etwa ein Zehntel bis ein Hunderstel des 300 °C heißen Titantetrachlorids von dem Verteilerring 6 unmittelbar in der Nähe der Einlaßdüsen 7 und 8, was zur Folge hat, daß, auch wenn der Generator beim Start nur Zimmertemperatur aufweist, die Temperatur um die Einlaßdüsen 7, 8, 9 stets ausreicht, das austretende Metallpulver und Chlor ohne weitere Hilfsmittel unmittelbar zur Reaktion zu bringen; sonst erforderliche Hilfsbrenner können bei dieser erfindungsgemäßen Vorrichtung entfallen.

Wegen der sehr effektiven Kühlung der Ausmauerung durch das Titantetrachlorid hat sich die Standzeit des Generators mindestens um einen Faktor 3 erhöht.

Das aus der Öffnung 5 austretende, zu einem Titandioxid-Brenner geführte Gasgemisch hat eine Temperatur von etwa 480 °C, was eine Reduktion an Zusatzenergie im Titandioxid-Brenner zur Folge hat. Um eine unnötige Wärmeabstrahlung des in den Kanälen 4 strömenden Titantetrachlorids zu vermeiden, ist eine zusätzliche Isolierschicht 14 in dem Generator angebracht.

## Patentansprüche

1. Verfahren zur Bildung von Metallchloriden aus Chlor und wenigstens einem in einem Gasstrom feinverteilten Metall in einem Generator und deren Einmischung in einen Titantetrachloridstrom, dadurch gekennzeichnet, daß die heißen Metallchloride vom direkten Wandkontakt im zylinderähnlichen Generator dadurch abgehalten werden, daß die Wandflächen des Generators innen in der gleichen Richtung wie die heißen Metallchloride von einem Titantetrachloridstrom filmartig überstrichen werden.

2. Verfahren nach Anspruch 1, dadurch gekennzeichnet, daß in dem einseitig deckelartig verschlossenen Generator Metall(e) und Chlor über den Deckel zugeführt werden und der Titantetrachloridstrom aus einem Verteilerring über einen Ringspalt nahe des Deckelbereiches des Generators gerichtet austritt.

3. Verfahren nach Anspruch 1 oder 2, dadurch gekennzeichnent, daß das Titantetrachlorid, ehe es die inneren Wandflächen des Generators überstreicht, durch Kanäle in der Ausmauerung des Generators strömt und dabei die Ausmauerung kühlt.

4. Verfahren nach Anspruch 1, 2 oder 3, dadurch gekennzeichnet, daß als feinverteiltes Metall Aluminium alleine oder gemischt mit Zink und/oder Zirkon und/oder Zinn eingesetzt wird und das feinverteilte Metall bzw. Metallgemisch vorzugsweise in einem Stickstoffstrom suspendiert ist.

5. Verfahren nach Ansprüchen 1 bis 4, dadurch gekennzeichnet, daß ein Teil des Titantetrachloridstromes auf die Stelle gerichtet ist, wo das feinverteilte Metall und das Chlor in den Reaktionsraum eingetragen werden.

6. Vorrichtung zur Erzeugung eines Metallchlorids oder eines Metallchloridgemisches, bestehend aus einem zylinderähnlichen, mit feuerfesten Steinen (2) ausgekleideten Reaktionsraum (1), wenigstens je einer zentral angeordneten Einlaßdüse (7, 8) für ein in einem Gasstrom feinverteiltes Metall oder Metallgemisch und für Chlor im oberen Bereich und einem Gasaustritt (5) im unteren Bereich, dadurch gekennzeichnet, daß im oberen Bereich des Reaktionsraumes (1) ein axialer Gaseinlaß (3) um die zentral angeordneten Einlaßdüsen (7, 8) vorhanden ist, der so ausgebildet ist, daß ein darüber in dem Reaktionsraum (1) eintretendes Gas die Auskleidung (2) der Wandfläche des Generators filmartig bestreicht, daß die Gaszufuhren als Kanäle (4) innerhalb der Auskleidung (2) verlaufen und daß die Einspeisung (11) des Gases in die Kanäle (4) im Bereich der Gasaustrittsöffnung (5) des Generators erfolgt.

7. Vorrichtung nach Anspruch 6, dadurch gekennzeichnet, daß der Reaktor abgeschlossen ist und der Gaseinlaß als ein Ringkanal (6) ausgebildet ist, Gaszufuhren zu dem Ringkanal (6) vorhanden sind und der Ringkanal (6) mit einem Ringspalt (3) in Verbindung steht.

8. Vorrichtung nach Anspruch 7, dadurch gekennzeichnet, daß die Strömung des Titantetrachlorids im Ringspalt (3) durch eine Reynolds Zahl zwischen 500 und 1500 charakterisiert wird.

9. Vorrichtung nach einem oder mehreren der Ansprüche 6 bis 8, dadurch gekennzeichnet, daß Kanäle (13) vorhanden sind, durch die ein Teil des Gases an die Stellen (7, 8) gelangt, wo die Metallpartikel und das Chlor in den Reaktionsraum (1) eingetragen werden.

## Claims

1. A process for the formation of metal chlorides from chlorine and at least one metal, finely distributed in a gas flow, in a generator and the incorporation thereof into a titanium tetrachloride flow, characterised in that the hot metal chlorides are withheld from direct wall contact in the cylinder-like generator in that the wall surfaces of the generator are internally coated with a titanium tetrachloride flow in the manner of a film in the same direction as the hot metal chlorides.

2. A process according to Claim 1, characterised in that in the generator, which is sealed at one end in the manner of a lid, metal(s) and chlorine are supplied via the lid and the titanium tetrachloride flow issues in directed manner from a distributor ring via an annular gap close to the lid region of the generator.

3. A process according to Claim 1 or 2, characterised in that before it coats the inner wall surfaces of the generator, the titanium tetrachloride flows through channels in the brick lining of the generator and thereby cools the brick lining.

4. A process according to Claim 1, 2 or 3, characterised in that aluminium, alone or mixed with zinc and/or zirconium and/or tin, is used as finely distributed metal, and the finely distributed metal or metal mixture is preferably suspended in a nitrogen flow.

5. A process according to Claims 1 to 4, characterised in that a part of the titanium tetrachloride flow is directed towards the location where the finely distributed metal and the chlorine are input into the reaction chamber.

6. A device for the production of a metal chloride or of a metal chloride mixture comprising a cylinder-like reaction chamber (1) lined with refractory bricks (2), in each case at least one centrally disposed inlet nozzle (7, 8) for a metal or metal mixture, finely distributed in a gas flow, and for chlorine in the upper region, and a gas outlet (5) in the lower region, characterised in that in the upper region of the reaction chamber (1) an axial gas inlet (3) is provided around the centrally disposed inlet nozzles (7, 8), the gas inlet (3) being designed such that a gas entering the reaction chamber (1) via said gas inlet (3) coats the lining (2) of the wall surface of the generator in the manner of a film, that the gas supply means extend as channels (4) within the lining (2), and that the feed-in (11) of the gas into the channels (4) takes place in the region of the gas outlet opening (5) of the generator.

7. A device according to Claim 6, characterised in that the reactor is sealed and the gas inlet has the form of an annular channel (6), gas supply means to the annular channel (6) are provided, and the annular channel (6) is connected to an annular gap (3).

8. A device according to Claim 7, characterised in that the flow of the titanium tetrachloride in the annular gap (3) is characterised by a Reynolds number of between 500 and 1500.

9. A device according to one or more of Claims 6 to 8, characterised in that channels (13) are provided through which a part of the gas reaches the locations (7, 8) where the metal particles and the chlorine are input into the reaction chamber (1).

## Revendications

1. Procédé de formation de chlorures métalliques à partir de chlore et d'au moins un métal finement distribué dans un courant de gaz dans un générateur et de leur incorporation à un courant de tétrachlorure de titane, caractérisé en ce que les chlorures métalliques chauds sont maintenus à l'abri de tout contact direct avec les parois du générateur semblable à un cylindre, de telle sorte que les surfaces des parois du générateur soient léchées intérieurement, dans le même sens que les chlorures métalliques chauds, par un film formé par un courant de tétrachlorure de titane.

2. Procédé selon la revendication 1, caractérisé en ce qu'un ou des métaux et du chlore sont acheminés à travers le couvercle du générateur fermé à la façon d'un couvercle sur un côté et le courant de tétrachlorure de titane sort d'un anneau de distribution via une fente annulaire proche de la zone du couvercle du générateur.

3. Procédé selon la revendication 1 ou 2, caractérisé en ce que le tétrachlorure de titane, avant qu'il ne lèche les surfaces des parois internes du générateur, s'écoule à travers des canaux de la maçonnerie du générateur et refroidit ainsi celle-ci.

4. Procédé selon la revendication 1, 2 ou 3, caractérisé en ce qu'on utilise comme métal finement distribué de l'aluminium seul ou en mélange avec du zinc et/ou du zirconium et/ou de l'étain et le métal ou le mélange métallique finement distribué est de préférence en suspension dans un courant d'azote.

5. Procédé selon les revendications 1 à 4, caractérisé en ce qu'une partie du courant du tétrachlorure de titane est dirigée vers le point où le métal finement distribué et le chlore sont introduits dans l'espace réactionnel.

6. Dispositif de production d'un chlorure métallique ou d'un mélange de chlorures métalliques, constitué d'un espace réactionnel (1) semblable à un cylindre garni de pierres réfractaires (2), d'au moins respectivement une buse d'admission (7, 8) agencée au centre pour un métal ou un mélange métallique finement distribué dans un courant de gaz et pour du chlore dans la zone supérieure et une sortie de gaz (5) dans la zone inférieure, caractérisé en ce que, dans la zone supérieure de l'espace réactionnel (1), il est prévu une admission de gaz axiale (3) autour des buses d'admission (7, 8) agencées au centre, ladite admission étant conformée de telle sorte qu'un gaz entrant par le dessus dans l'espace réactionnel (1), lèche, sous la forme d'un film, le garnissage (2) de la surface des parois du générateur, en ce que les conduites de gaz s'étendent à l'intérieur du garnissage (2) sous la forme de canaux (4) et en ce que l'introduction (11) du gaz dans les canaux (4) se fait dans la zone de l'ouverture de sortie de gaz (5) du générateur.

7. Dispositif selon la revendication 6, caractérisé en ce que le réacteur est fermé et l'admission de gaz se présente sous la forme d'un canal annulaire (6), en ce qu'il est prévu des conduites de gaz d'entrée vers le canal annulaire (6) et en ce que le canal annulaire (6) est en communication avec une fente annulaire (3).

8. Dispositif selon la revendication 7, caractérisé en ce que l'écoulement du tétrachlorure de titane dans la fente annulaire (3) est caractérisé par un indice de Reynolds compris entre 500 et 1500.

9. Dispositif selon une ou plusieurs des revendications 6 à 8, caractérisé en ce qu'il est prévu des canaux (13) à travers lesquels une partie du gaz parvient aux endroits (7, 8) où les particules métalliques et le chlore sont introduits dans l'espace réactionnel (1).
